# EUROPÄISCHE PATENTANMELDUNG

(11) **EP 3 210 566 A1**
(43) Veröffentlichungstag der Anmeldung: **30.08.2017**
(21) Anmeldenummer: 17000286.9
(22) Anmeldetag: 23.02.2017
(51) Int. Cl.: A61C 17/02, A61C 17/20

(54) **ZAHNREINIGUNGSAPPARATUR**

(30) Priorität: 23.02.2016 DE 102016002054
(71) Anmelder: Edelmann, Johannes, 14612 Falkensee (DE)
(72) Erfinder: Edelmann, Johannes, 14612 Falkensee (DE)
(74) Vertreter: Schmelcher, Thilo

(57) **Zusammenfassung**

Die Erfindung betrifft eine Gebissreinigungsapparatur (1) mit einem mundgerecht geformten Mundstück (2), welches ausgestaltet ist, in einer Mundhöhle eine mehrere Zähne umschließende Reinigungskammer (3) auszuformen, wobei der Teil des Mundstücks (2), welcher ausgestaltet, ist die Reinigungskammer (3) auszuformen, eine Dichtlippe (4) aufweist, über welche die Reinigungskammer (3) in der Mundhöhle gegenüber dem die Zähne umgebenden Zahnfleisch abdichtbar ist, wobei das Mundstück (2) in die Reinigungskammer (3) hineingerichtete Düsen (8) aufweist, durch welche eine Druckspülung von Zähnen oder Interdentalzwischenräumen mit einem Fluid bewirkbar ist, wobei die Gebissreinigungsapparatur (1) Mittel zum Befüllen der Reinigungskammer (3) mit zumindest einem Fluid aufweist, und die Gebissreinigungsapparatur (1) einen Schwingungsgeber aufweist, mit welchem ein Fluid in der Reinigungskammer (3) in Schall- oder Ultraschallschwingung versetzbar ist.

Erfindungsgemäß ist dabei vorgesehen, dass die Dichtlippe (4) elastisch verformbar ist und die Gebissreinigungsapparatur (1) zur Abdichtung der Reinigungskammer (3) gegenüber dem Zahnfleisch Mittel zur Anpassung der Dichtlippe (4) an die Kontur des Zahnfleisches aufweist.

## Beschreibung

Die Erfindung betrifft eine Gebissreinigungsapparatur mit einem mundgerecht geformten Mundstück, welches ausgestaltet ist, eine mehrere Zähne umschließende Reinigungskammer auszuformen.

### Stand der Technik

Heutzutage übliche Reinigungsmittel für die Reinigung des Gebisses sind Mundspülungen und Zahnbürsten in Kombination mit Zahnseide. Dabei ist das Reinigungsergebnis in erheblichen Maße von der Führung der Zahnbürste und der Anwendung von Zahnseide durch den Benutzer abhängig. Nicht selten führt dies dazu, dass die Reinigung des Gebisses zu kurz, zu ungleichmäßig oder nicht zielgerichtet erfolgt. Darüber hinaus kann eine falsche Anwendung, beispielsweise durch falsche Führung der Zahnbürste, gegebenenfalls verstärkt durch die Verwendung zu harter Borsten, auch zerstörerische Folgen in Form einer Schädigung des Zahnfleisches, dem Freilegen von Zahnhälsen oder der Abtragung des Zahnschmelzes mit sich führen.

Aus dem Stand der Technik sind auch Vorrichtungen zur Spülung, insbesondere der Interdentalzwischenräume bekannt, bei denen durch die Verwendung eines mundgerecht geformten, U-förmigen Mundstücks, die gesamten Zahnreihen des Unter- und/oder Oberkiefer umschlossen werden, um die zielgerichtete Reinigung von mehreren Interdentalzwischenräumen gleichzeitig zu erzielen. Ein derartiges Mundstück wird als Munddusche in der DE 1052060 B beschrieben. Allerdings sind derartige Mundstücke relativ unhandlich und im Markt derzeit de facto nicht vorzufinden.

Ferner sind aus dem Stand der Technik Reinigungsvorrichtungen mit mundgerecht geformten Mundstück bekannt, bei welchem das Mundstück, ggf. darin angeordnete Borsten, oder ein darin befindliches flüssiges Reinigungsfluid in Ultraschallschwingung versetzbar ist, um eine Ultraschallreinigung der umschlossenen Zähne zu bewirken. Die DE 202005018522 U1 beschreibt eine derartige Reinigungsvorrichtung. Ein Vorteil derartiger Reinigungsvorrichtungen besteht grundsätzlich darin, dass sämtliche Zähne gleichzeitig und mit gleicher Intensität zu reinigen sind. Allerdings sind diese Reinigungsvorrichtungen ebenfalls im Vergleich zu einer Zahnbürste unhandlich, und die bisher bekannten technischen Lösungen sind im Markt de facto nicht vorzufinden.

### Offenbarung der Erfindung

Die bisher bekannten Gebissreinigungsapparaturen mit einem mundgerecht geformten Mundstück haben sich bisher im Markt nicht durchsetzen können.

Aufgabe der Erfindung ist es, eine technische Lösung für eine Gebissreinigungsapparatur anzugeben, welche eine verbesserte, zuverlässigere Reinigungsleistung sowie einen höheren Komfort für einen Benutzer bietet.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß vorgesehen ist eine Gebissreinigungsapparatur mit einem mundgerecht geformten Mundstück, welches ausgestaltet ist, in einer Mundhöhle eine mehrere Zähne umschließende Reinigungskammer auszuformen, wobei der Teil des Mundstücks, welcher ausgestaltet ist, die Reinigungskammer auszuformen, eine Dichtlippe aufweist, über welche die Reinigungskammer in der Mundhöhle gegenüber dem die Zähne umgebenden Zahnfleisch abdichtbar ist, wobei das Mundstück in die Reinigungskammer hineingerichtete Düsen aufweist, durch welche eine Druckspülung von Zähnen oder Interdentalzwischenräumen mit einem Fluid bewirkbar ist, wobei die Gebissreinigungsapparatur Mittel zum Befüllen der Reinigungskammer mit zumindest einem Fluid aufweist, und die Gebissreinigungsapparatur einen Schwingungsgeber aufweist, mit welchem ein Fluid in der Reinigungskammer in Schall- oder Ultraschallschwingung versetzbar ist, wobei die Dichtlippe elastisch verformbar ist und die Gebissreinigungsapparatur zur Abdichtung des Teil des Mundstücks, welcher ausgestaltet ist, die Reinigungskammer auszuformen, gegenüber dem Zahnfleisch Mittel zur Anpassung der Dichtlippe an die Kontur des Zahnfleisches aufweist.

Um eine möglichst gute Akzeptanz bei einem Benutzer zu erzielen, ist ein guter Komfort bei der Benutzung erforderlich, zu welchem eine sichere, zuverlässige Funktion gehört und welche zudem eine fehlertolerante Bedienung erlaubt.

Diesbezüglich bietet die erfindungsgemäße Gebissreinigungsapparatur mehrere Vorteile. Voraussetzung für eine effektive Funktion der Gebissreinigungsapparatur ist die Übertragung der Ultraschallwellen zu den zu reinigen Zahnflächen. Dazu ist es erforderlich, dass diese von einem flüssigen Fluid, beispielsweise in Form einer Reinigungsflüssigkeit, umgeben sind. Durch die Übertragung der Schall- bzw. Ultraschallwellen durch die Flüssigkeit und die durch die an der Grenzfläche von Flüssigkeit zu Zahnoberfläche hervorgerufene Kavitation kann die Ultraschallreinigung ihre Wirkung effizient entfachen.

Eine zuverlässige Zahnreinigung ist daher damit verbunden, dass die Zahnoberflächen zuverlässig von einer Flüssigkeit umgeben sind. Um wiederum die Zahnoberflächen zuverlässig mit einer Flüssigkeit umgeben zu können, ist eine zuverlässige Abdichtung der Reinigungskammer gegenüber der Mundhöhle erforderlich.

Die erfindungsgemäße Gebissreinigungsapparatur bietet den Vorteil, dass die Dichtlippe nicht nur elastisch verformbar ist, sondern dass darüber hinaus Mittel vorhanden sind, die die Anpassung der Dichtlippe an das Zahnfleisch unterstützen. Dabei werden unter dem Begriff des Zahnfleisches neben den die Zahnhälse unmittelbar umgebenden Schleimhäuten in einer weiteren Begriffsdefinition auch der Übergang zum Alveolarfortsatz, dies ist der die Zahnfächer ausbildende Teil des Kiefers, sowie die Übergänge zum Gaumen, zum Mundboden und zum Unterkiefer sowie die Umschlagsfalten zur Wange hin mit bezeichnet.

Über die Herstellung eines Formschlusses der Dichtlippe zu dem Zahnfleisch kann ein Entweichen der Flüssigkeit aus der Reinigungskammer heraus verhindert werden. Die Mittel zur Anpassung der Dichtlippe an das Zahnfleisch zeichnen sich dadurch aus, dass sie nach einem Anlegen der Gebissreinigungsapparatur die Entstehung sowie den Bestand eines Formschlusses zwischen Dichtlippe und Zahnfleisch bewirken.

Dabei weisen sich die Mittel dadurch aus, dass sie geeignet sind, eine Kraft auf die Dichtlippe auszuüben, die ein aktives Anpassen der Dichtlippe an das Zahnfleisch ermöglicht. Die Mittel zeichnen sich somit dadurch aus, dass sie nach einem Anlegen der Gebissreinigungsapparatur aus sich heraus, d.h. ohne die Mitwirkung eines Benutzers, geeignet sind, eine Kraft oder Kräfte auf die elastische Dichtlippe auszuüben, welche geeignet sind, einen Formschluss zwischen Dichtlippe und Zahnfleisch herzustellen und aufrecht zu erhalten. Die Ausgestaltung dieser Mittel kann auf unterschiedliche Weise erfolgen. Entsprechende Ausführungsbeispiele der Gebissreinigungsapparatur können beispielsweise Klemm- und/oder Haltemittel aufweisen, welche beispielsweise auf die Zähne bzw. das diese umgebende Zahnfleisch in Höhe der Zahnwurzeln aufgeklemmt werden, und deren Rückstellkräfte auf die elastische Dichtlippe einwirken. Alternativ oder ergänzend können entsprechende Ausführungsbeispiele beispielsweise aber auch pneumatische Mittel aufweisen.

Entgegen einer Gebissreinigungsapparatur nach dem Stand der Technik, welche zur Abdichtung der Reinigungskammer gegenüber einer Mundhöhle einen stetigen Andruck, entweder durch die Hand oder durch die jeweils gegenüberliegende Kieferhälfte, erfordert, weist die erfindungsgemäße Gebissreinigungsapparatur somit aus sich heraus Mittel auf, die nach einem Anlegen der Gebissreinigungsapparatur aus sich heraus geeignet sind, den Formschluss zwischen elastische Dichtlippe und Zahnfleisch aufrecht zu erhalten. Mit anderen Worten weist die Gebissreinigungsapparatur Mittel zur automatischen Abdichtung der Reinigungskammer auf.

Die erfindungsgemäße Gebissreinigungsapparatur bietet somit den Vorteil, dass auch bei einer kurzzeitigen Unterbrechung des Formschlusses zwischen Dichtlippe und Zahnfleisch, sei es durch eine Bewegung des Kiefers oder eine manuelle Einwirkung auf die Gebissreinigungsapparatur, ein Formschluss zwischen Dichtlippe und Zahnfleisch automatisch wiederhergestellt wird, so dass ein Entweichen eines größeren Teils des (Reinigungs-) Fluids vermieden werden kann. Die Gefahr, dass die zu reinigenden Zähne nicht mehr vollständig von einem (Reinigungs-)Fluid umgeben sind, was wiederum zu einer Einschränkung der Reinigungsleistung führt, kann somit gesenkt werden.

In einer ersten vorteilhaften Ausführungsform der Erfindung weist das Mundstück zum Andruck der Dichtlippe an das Zahnfleisch Federklammern auf. Diese werden bei einem Anlegen der Gebissreinigungsapparatur gespannt und bewerkstelligen für die Zeit der Benutzung der Gebissreinigungsapparatur einen steten Andruck der Dichtlippe an das Zahnfleisch. Dabei können die Federklammern in einer ersten Ausführungsvariante an oder in dem Mundstück quer zu einer Reihe von zu umschließenden Zähnen angeordnet sein und einzelne oder mehrere Zähne im Bogen überspannen. Bei dieser Ausführungsform ist eine U-förmige Federklammer dadurch spannbar, dass diese über einen Zahn gestülpt wird. Die beiden Schenkel der U-förmigen Federklammer sind jeweils geeignet, einen Druck auf eine auf dem Zahnfleisch anliegende Dichtlippe auszuüben, wobei sich die auf gegenüberliegenden Seiten eines Zahnes wirkenden Andruckkräfte gegenseitig kompensieren.

In einer zweiten, alternativen oder ergänzenden Ausführungsvariante weist das Mundstück Federklammern auf, die längs zu einer Reihe von zu umschließenden Zähnen angeordnet sind. Bei dieser Ausführungsform ist eine bogenförmige Federklammer dadurch spannbar, dass diese entlang der Innenseite oder entlang der Außenseite der Zahnreihen des Ober- oder Unterkiefers eingesetzt wird, sodass die Rückstellkräfte der Federn über im Kiefer einander gegenüberliegenden Zähnen sowie den dazwischenliegenden Kieferknochen kompensiert wird. Dazu weist im ungespannten Zustand eine innenliegende Feder einen Radius auf, der etwas oberhalb des Radius des Kiefers liegt, und eine außenliegende Feder einen Radius auf, der etwas unterhalb des Radius des Kiefers liegt. Dabei können zur Optimierung des Andrucks für verschiedene Kiefergrößen unterschiedliche Radien vorgesehen sein. Die bogenförmigen Federklammern können beispielsweise auf oder in einer Wandung der Reinigungskammer angeordnet sein. Vorteilhaft weist die Gebissreinigungsapparatur weiterhin eine Fluidpumpe auf, wobei die elastische Dichtlippe als geschlossener elastischer Schlauch ausgeführt ist und ein Anpassen der Dichtlippe an die Kontur des Zahnfleisches über eine Druckveränderung in der Dichtlippe durch die Zufuhr eines Fluids erzielbar ist.

Diese Ausführungsform bietet den Vorteil, dass die Dichtlippe mit einem gleichmäßigen Andruck und mit einer feinflächigen Ortsauflösung an die Konturen des Kiefers anpassbar ist. So weist der Kiefer eine Vielzahl von anatomisch bedingten Unebenheiten auf. Der Alveolarfortsatz ist nicht plan, sondern bildet in einer Wellenform die Positionen der einzelnen Zähne nach, ferner erfordert gegebenenfalls auch das Lippenbändchen eine weiche Anpassung der Dichtlippe. Durch eine Ausführung der Dichtlippe als aufblasbarer Schlauch ist ein gleichmäßiger Andruck erzielbar.

Alternativ zu einem Auflbasen mit einem Gas, insbesondere Luft, kann die Drucksteigerung durch eine Flüssigkeit erfolgen, welche beispielsweise mit der Flüssigkeit zur Reinigung oder einer Flüssigkeit zur Spülung der zu reinigenden Zähne identisch ist.

Vorteilhaft umfassen die Mittel zum Befüllen der Reinigungskammer oder die Mittel zur Druckspülung unter anderem eine Fluidpumpe, welche vorteilhaft in einem Handgriff der Gebissreinigungsapparatur angeordnet ist. Weiterhin vorteilhaft ist ein Befüllen der Reinigungskammer und eine Druckspülung, oder ein Befüllen der Reinigungskammer und eine Druckveränderung in der Dichtlippe, oder eine Druckspülung und eine Druckveränderung in der Dichtlippe mittels derselben Fluidpumpe bewirkbar.

Im Falle der Ausgestaltung der Dichtlippe als geschlossener Schlauch können ein Druckaufbau in der Dichtlippe sowie die Druckspülung unabhängig voneinander erfolgen. Unter Verwendung derselben Fluidpumpe kann, beispielsweise gesteuert über ergänzende Ventile, ein Abdichten der Reinigungskammer unabhängig von einer Spülung oder eine Spülung ohne eine Abdichtung der Reinigungskammer erfolgen.

In einer weiteren Ausgestaltung der Erfindung weist der Teil des Mundstücks, welcher ausgestaltet ist, die Reinigungskammer auszuformen, Haltemittel zum eigenständigen Anhaften an das Zahnfleisch auf. Auch dieses Merkmal bietet den Vorteil, dass die Dichtlippe möglichen Bewegungen der Zahnreihen bzw. des Kiefers folgen kann, da die Dichtlippe über die Haltemittel mit dem Zahnfleisch verbunden ist.

Vorteilhaft sind die Haltemittel in Form von einer einzelnen oder ein Mehrzahl von Saugvorrichtungen ausgebildet, die manuell oder mittels eines in ihnen erzeugten Unterdrucks an das Zahnfleisch anhaftbar sind. Vorteilhaft weist das Mundstück eine Mehrzahl an das Zahnfleisch oder umgebende Partien der Mundhöhle anhaftbare Saugvorrichtungen auf. Vorteilhaft sind die Saugvorrichtungen an einer Wandung des Mundstücks angeordnet. Dadurch ist die Wandung des Mundstücks für sich an das Zahnfleisch anhaftbar. Vorteilhaft sind die Saugvorrichtungen am Rand des Mundstücks angeordnet. Vorteilhaft ist entlang der Dichtlippe eine Vielzahl von Saugnäpfen angeordnet. Die Saugnäpfe können derart ausgeführt sein, dass ein Anhaften der Saugnäpfe gegebenenfalls allein durch einen Andruck durch einen Benutzer an das Zahnfleisch bewirkbar ist. Alternativ oder ergänzend weisen die Saugnäpfe eine Verbindung mit einer Unterdruckleitung auf, so dass ein Anhaften durch die Erzeugung eines Unterdrucks, beispielsweise mittels einer Unterdruckluftpumpe erzielbar ist. Die Saugnäpfe können sowohl innerhalb als auch außerhalb der Reinigungskammer angeordnet sein. Vorteilhaft ist ein Teil der Saugnäpfe entlang der Dichtlippe innerhalb und ein anderer Teil außerhalb der Reinigungskammer angeordnet.

In einer weiteren Ausführungsform weist der Teil des Mundstücks, welcher ausgestaltet ist die Reinigungskammer auszuformen, nicht nur eine, sondern zwei parallel angeordnete Dichtlippen zur Ausgestaltung eines spaltartigen Zwischenraumes auf, wobei die Gebissreinigungsapparatur ferner eine Vorrichtung zur Erzeugung eines Unterdrucks in dem spaltartigen Zwischenraum aufweist. Bei dieser Ausführungsform wird durch die parallel verlaufenden Dichtlippen ein langgestreckter Saugnapf ausgebildet. Das Mundstück zur Ausbildung einer Reinigungskammer für einen Unterkiefer, einen Oberkiefer oder auch zur Ausbildung einer Reinigungskammer für beide Kieferhälften kann abschnittsweise durch mehrere dieser derartigen Saugnäpfe, oder auch je Kieferhälfte mit einem einzelnen, ringartig verlaufenden Saugnapf mit dem Zahnfleisch verbunden sein.

Weiterhin vorteilhaft weisen die Dichtlippen eine adhäsive Oberfläche auf, durch welche die Anhaftung der Dichtlippen an das Zahnfleisch unterstützt wird. Dazu weist das Profil der Dichtlippe vorteilhaft eine Auflagefläche auf, die zur flächigen Kontaktierung des Zahnfleisches geeignet ist. Der Querschnitt der Dichtlippe ist dazu über den Verlauf einer Kieferhälfte nicht gleichmäßig rund, sondern derart asymmetrisch ausgestaltet, dass die Dichtlippe mit einem relativ großen Abschnitt des Rands entlang ihres Querschnitts auf dem Zahnfleisch aufliegt.

Vorteilhaft sind diese Flächen der Dichtlippe zur Auftragung einer Haftcreme, beispielsweise in Form einer Prothesenhaftcreme, geeignet, so dass nach einem Einsetzen und Andrücken des Mundstücks im Kiefer eine zusätzliche Anhaftung erzielbar ist. Alternativ sind die Flächen für den Einsatz von Haftstrips vorgesehen, welches den Vorteil bietet, dass weniger Haftcremerückstände in der Mundhöhle verbleiben.

Um das Mundstück individuell an eine Mundhöhle anpassen zu können, ist es vorteilhaft, das Mundstück oder insbesondere die Reinigungskammer plastisch verformbar auszubilden. Dazu weist das Mundstück beispielsweise ein Material auf, welches nach einem Formvorgang aushärtbar ist. Vorteilhaft ist das Mundstück aus einem Thermoplast ausgebildet. Darüber hinaus weist die Gebissreinigungsapparatur vorteilhaft einen Handgriff und einen Verbindungsmechanismus zwischen Handgriff und Mundstück auf, wobei der Verbindungsmechanismus derart ausgeführt ist, dass er mit einem Satz verschiedener Mundstücke verbindbar ist. Vorteilhaft weist die Gebissreinigungsapparatur weiterhin einen Erkennungsmechanismus zur Unterscheidung verschiedener Mundstücke auf. Der Erkennungsmechanismus kann beispielsweise derart ausgeführt sein, dass verschiedene Mundstücke anhand unterschiedlicher Resonanzeigenschaften der Mundstücke erkannt werden.

Anhand der Erkennung der Mundstücke kann eine individuelle Zuordnung und Aktivierung eines individuellen Reinigungsprogramms erfolgen. Da hygienische Aspekte es nahelegen, dass ein Mundstück individuell von nur einer Person genutzt wird, ist somit über das Mundstück ein individuelles, personenbezogenes Reinigungsprogramm zuordenbar, welches gegebenenfalls zuvor individuell programmiert wurde. Vorteilhaft weist die Gebissreinigungsapparatur daher einen Erkennungsmechanismus auf, mit Hilfe dessen ein Mundstück von der Gebissreinigungsapparatur identifizierbar ist. Weiterhin vorteilhaft ist durch die Gebissreinigungsapparatur anhand eines identifizierten Mundstücks eine individuell programmierte Steuerung zuordenbar.

Grundsätzlich kann ein Mundstück eine einseitige oder doppelseitige Reinigungskammer ausbilden. Bei einer Ausgestaltung zur Ausbildung einer einseitigen Reinigungskammer weist die Wandung des Mundstücks in etwa ein ∩-förmiges Profil zur Reinigung des Ober- oder Unterkiefers auf, im Falle einer Ausgestaltung zur Ausbildung doppelseitigen Reinigungskammer weist die Wandung des Mundstücks in etwa ein H-förmiges Profil auf, wobei auf den mittleren Querbalken des "H" auch verzichtet werden kann. Letzteres Mundstück ist zur gleichzeitigen Reinigung sowohl des Ober- als auch des Unterkiefers geeignet.

Im Falle einer doppelseitigen Reinigungskammer weist diese eine innere, zur Zunge hin gerichtete, und eine äußere, zu Lippen und Wange hin gerichtete Wandung auf, wobei die Wandungen wiederum jeweils eine obere und untere Dichtlippe aufweisen. Dabei ist das Höhenprofil der äußeren Wandung vorteilhaft derart ausgebildet, dass die obere Dichtlippe in der Mundhöhle in der oberen Umschlagfalte zwischen oberen Alveolaransatz und Wange und die untere Dichtlippe in der unteren Umschlagsfalte zwischen unteren Alveolaransatz und Wange zu liegen kommt. Diese Ausführung bietet den Vorteil, dass die beiden Umschlagsfalten für das Mundstück jeweils einen guten, rutschsicheren Halt bieten. Gleichzeitig kann die Wandung dabei einen Anschlag ausbilden, bis zu dem der Mund geschlossen werden kann. Das Höhenprofil der inneren Wandung ist vorteilhaft derart ausgebildet, dass die untere Dichtlippe im Bereich des unteren Alveolarfortsatzes und die obere Dichtlippe im Übergangsbereich zwischen oberem Alveolarfortsatz und Gaumen anliegen.

Vorteilhaft können die Düsen der Gebissreinigungsapparatur zumindest teilweise derart ausgeführt sein, dass diese zur Pulverbestrahlung oder zur alternativen Druckspülung/Pulverbestrahlung geeignet sind. Eine derartige Ausgestaltung bietet den Vorteil, dass alternativ oder zusätzlich zu einer Druckspülung mit einem Fluid, beispielsweise einer Reinigungsflüssigkeit, eine Reinigung mittels eines Druckluft-Pulver-Gemisches oder eines Druckluft-Pulver-Flüssigkeitsgemisches möglich ist. Vorteilhaft ist insbesondere eine Ausgestaltung der Gebissreinigungsapparatur, bei welcher ein Pulver mittels eines Luftdrucks von 3 bis 5 bar unter Beimengung einer Flüssigkeit durch die Düse abstrahlbar ist. Dabei werden vorteilhaft niedrigabrasive Pulver, beispielsweise auf Erythritolbasis, verwendet.

Der Einsatz von Pulverstrahlungstechniken beziehungsweise von abrasiven Partikeln in der Zahnreinigung birgt in der Regel die nicht unerhebliche Gefahr eine Schädigung von Zähnen und Zahnfleisch. Diese Gefahr ist bei der vorliegenden Gebissreinigungsapparatur deutlich reduzierbar, da durch die exakte Positionierung der Reinigungskammer in der Mundhöhle eine gezielte Positionierung der Düsen erreicht werden kann. Des Weiteren ist durch eine Programmsteuerung der Gebissreinigungsapparatur die Pulverbestrahlungsdauer, der Druck, die Partikeldichte und Partikelmenge vorgebbar, so dass die Gefahr einer Fehlbedienung oder Überbehandlung reduzierbar ist.

Weiterhin vorteilhaft ist die Gebissreinigungsapparatur derart ausgestaltet, dass die Reinigungskammer ein Flimmerhaarvlies aufweist. Dieses wird vorteilhaft durch eine Vielzahl von Karbonfasern ausgebildet, welche weiterhin vorteilhaft sehr feine Polierkörper, beispielsweise auf Aktivkohlebasis aufweisen. Eine derartige Ausführungsform bietet den Vorteil, dass der Ultraschall-Reinigungsvorgang durch das in Schwingung versetzbare Flimmerhaarvlies zusätzlich mechanisch unterstützt werden kann, wobei mittels von Karbonfasern, insbesondere wenn diese Polierpartikel auf Aktivkohlebasis aufweisen, sehr gute Polierergebnisse erzielbar sind.

Vorteilhaft ist die Gebissreinigungsapparatur ausgeführt, ein für eine Druckspülung verwendetes Fluid in der Reinigungskammer aufzufangen und mit dem aufgefangenen Fluid eine Ultraschallreinigung von durch die Reinigungskammer umschließbaren Zähnen zu bewirken. Auf diese Weise kann eine für Anwendung der Gebissreinigungsapparatur benötigte Fluidmenge gering gehalten werden, so dass diese beispielsweise in einem Tank innerhalb des Handgriffs der Gebissreinigungsapparatur mitführbar ist.

Vorteilhaft weist die Gebissreinigungsapparatur Mittel auf, mittels derer die Reinigungskammer geöffnet und geschlossen werden kann. Diese können beispielsweise in Form eines Ventils ausgebildet sein. Vorteilhaft kann ein Öffnen der Reinigungskammer durch eine Druckminderung in der Dichtlippe bewirkt werden. Die Druckminderung bewirkt eine Aufhebung des Formschlusses zwischen Dichtlippe und Zahnfleisch, sodass ein in der Reinigungskammer befindliches Fluid in die Mundhöhle entweichen kann. Weiterhin kann ein Öffnen durch eine Abschwächung der Wirkung eines Haltemittels erzielt, sodass der Formschluss zwischen Dichtlippe und Zahnfleisch aufgehoben wird. Bei einer Ausgestaltung der Haltemittel als Saugnäpfe mit Unterdrucksteuerung ist ein Öffnen der Reinigungskammer durch ein Aufheben des Unterdrucks erzielbar.

Vorteilhaft weist die Gebissreinigungsapparatur eine Steuerung auf, welche eingerichtet ist, die Schritte auszuführen
I. Druckspülen von Interdentalzwischenräumen mit einem Fluid, wobei das Fluid in der Reinigungskammer aufgefangen wird;
II. Ultraschallreinigung von durch die Reinigungskammer umschlossenen Zähnen mittels des in der Reinigungskammer aufgefangenen Fluids;
III. Öffnen der Reinigungskammer und Ablassen des darin befindlichen Fluids;
IV. Druckspülen von Interdentalzwischenräumen mit einem Fluid, wobei ein Ablassen des Fluids aus der Reinigungskammer erfolgt.

Dabei bietet eine Gebissreinigungsapparatur mit einer derartigen Schrittfolge den Vorteil, dass die gesamte Reinigung inklusive Spülung fest vorgegeben werden kann. Dabei wirkt sich vorteilhaft aus, dass die Gebissreinigungsapparatur ein Öffnen der Reinigungskammer bewirken kann, so dass die Gebissreinigungsapparatur zwischen den Schritten II und IV, das heißt zwischen dem Reinigungsschritt und dem abschließenden Spülschritt, nicht abgesetzt werden muss. Auf diese Weise kann ein Benutzer passiv das Ende der Schrittfolge abwarten, welches beispielsweise durch ein Signal akustisch und/oder optisch signalisierbar ist. Die fehlende Notwendigkeit, in den Reinigungsprozess aktiv eingreifen zu müssen, reduziert die Gefahr, dass dieser seitens des Benutzers durch entsprechende Unterlassung vorzeitig beendet wird.

Vorteilhaft können die Parameter für die einzelnen Schritte, und dabei vorteilhaft innerhalb vorgegebener Grenzen, programmierbar sein, so dass die Dauer der Reinigungsschritte, der Druck und die Fluidmenge während der Druckspülungen sowie die Intensität und der Frequenzbereich der Ultraschallreinigung einstellbar sind. Auf diese Weise können individuelle Wünsche oder Erfordernisse eines Benutzers berücksichtigt werden.

Vorteilhaft sind diese Parameter für mehrere Personen individuell speicherbar, wobei ein Abrufen der individuellen Parameter bei einem Start des Reinigungsprozesses manuell oder automatisch, beispielsweise aufgrund eines Erkennungsmechanismus abrufbar sind.

Vorteilhaft ist die Gebissreinigungsapparatur derart ausgestaltet, dass sie sowohl einen Betriebsmodus zum Betrieb im Ultraschallbereich als auch einen Betriebsmodus zum Betrieb im Schallbereich aufweist. Vorteilhaft weist die Gebissreinigungsapparatur einen Betriebsmodus auf, in welchem zwischen einem Betrieb im Ultraschallbereich und einem Betrieb im Schallbereich, oder einem Betrieb im Schallbereich und einem Betrieb im Ultraschallbereich gewechselt wird. Weiterhin vorteilhaft weist die Gebissreinigungsapparatur einen Betriebsmodus auf, in welchem zwischen einem Betrieb im Schallbereich und einem Betrieb im Ultraschallbereich, oder umgekehrt, mehrfach gewechselt wird.

Eine Ausgestaltung der Gebissreinigungsapparatur mit wenigstens zwei verschiedenen Betriebsmodi, welche zum einen im Schallbereich und zum anderen im Ultraschallbereich liegen, bietet mehrere Vorteile.

Der Betrieb der Gebissreinigungsapparatur im Schallbereich führt zu einer oszillierenden Bewegung der Reinigungsflüssigkeit mit dadurch verursachten Spüleffekten. Dieser Betriebsmodus mit einer Betriebsfrequenz im Schallbereich ist durch einen Benutzer gut wahrnehmbar,

Der Betrieb der Gebissreinigungsapparatur im Ultraschallbereich führt ebenfalls zu einer oszillierenden Bewegung der Reinigungsflüssigkeit. Anders allerdings als im Schallbereich, beruht der Reinigungseffekt nicht auf einer Umströmung/Spülung von zu reinigenden Gebisspartien, sondern auf dem Effekt der Kavitation, bei welchem an den Grenzflächen zwischen Flüssigkeit und Gebiss etwaige Verschmutzungen durch oszillierend entstehende und wieder kollabierende Gasbläschen unter Begleitung hoher Druckspitzen gelöst werden.
Dieser Betriebsmodus mit einer Betriebsfrequenz im Ultraschallbereich ist durch einen Benutzer nicht oder zumindest weniger gut wahrnehmbar.

Ein Wechsel zwischen beiden Betriebsmodi erlaubt dabei nicht nur die Kombination beider Reinigungseffekte, er führt vielmehr erst dazu, dass durch den Wechsel, insbesondere einem wiederholten Wechsel, zwischen den Betriebsmodi beide Modi für den Benutzer wahrnehmbar sind. Insbesondere wird eine Gebissreinigungsapparatur, welche beispielsweise alternierend im Ultraschallbereich wie auch im Schallbereich betrieben wird, die Wahrnehmbarkeit der einzelnen Reinigungsphasen verbessern. Neben einer besseren Akzeptanz der scheinbar inaktiven Reinigungsphasen führt die verbesserte Wahrnehmbarkeit der Ultraschallbetriebsmodi zu einer Reduzierung von Rückläufern auf Grund von vermeintlichen Geräteausfällen.

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: eine schematische Zeichnung einer bevorzugten Ausführungsform der Erfindung;
- Fig. 2: einen Querschnitt durch eine einseitige Reinigungskammer mit einer Federklammer, die einen Zahn überspannt;
- Fig. 3a: einen Längsschnitt durch eine einseitige Reinigungskammer mit zwei entlang der Zahnreihen angeordneten Federklammern;
- Fig. 3b: einen Querschnitt durch eine einseitige Reinigungskammer mit zwei entlang der Zahnreihen angeordneten Federklammern;
- Fig. 4: einen Querschnitt durch eine einseitige Reinigungskammer mit einer aufblasbaren Dichtlippe;
- Fig. 5: einen Querschnitt durch eine einseitige Reinigungskammer mit einer Mehrzahl von Saugvorrichtungen;
- Fig. 6: einen Querschnitt durch eine einseitige Reinigungskammer mit zwei parallel angeordnete Dichtlippen;
- Fig. 7: einen Querschnitt durch eine doppelseitige Reinigungskammer mit Düsen und Schwingblechen;
- Fig. 8: einen Querschnitt durch eine Anordnung einer doppelseitigen Reinigungskammer in einer Mundhöhle;
- Fig. 9: einen Detaildarstellung einer Reinigungskammer mit Flimmerhaarvlies.

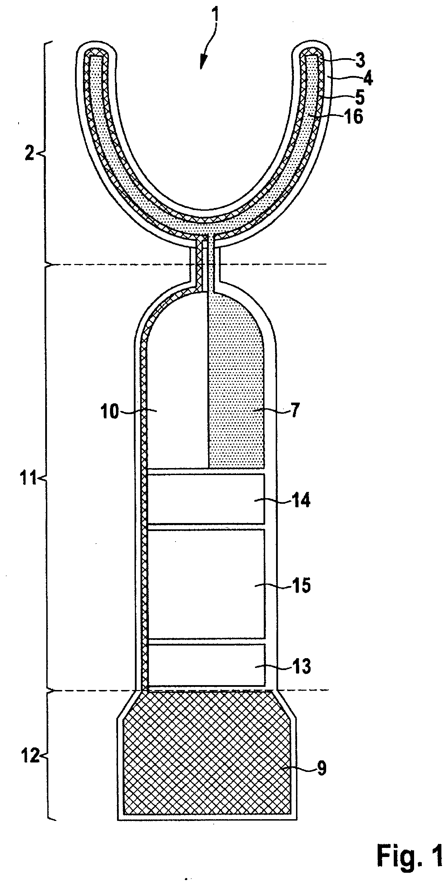

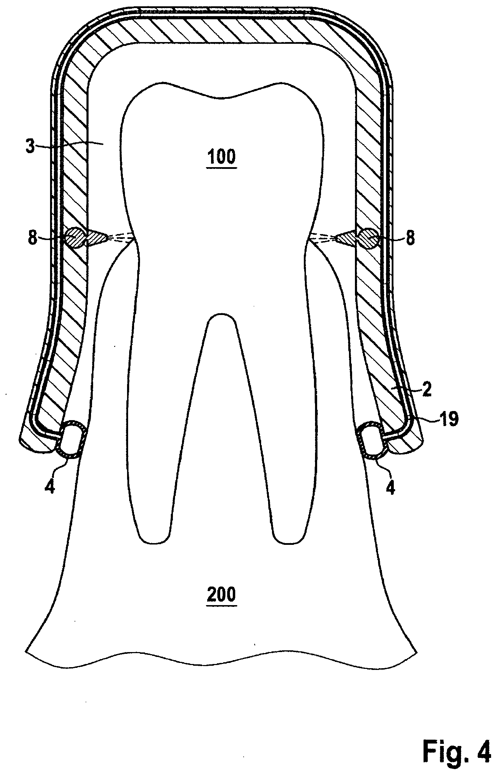

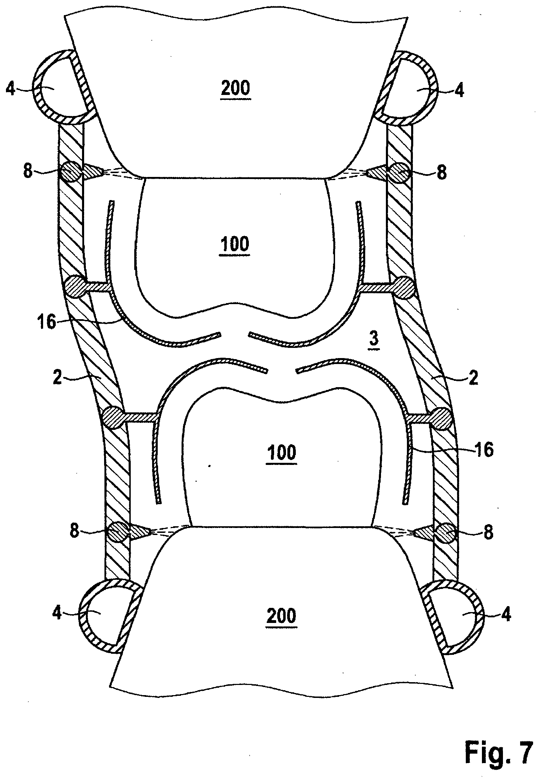

Aus Fig. 1 ist schematisch eine Gebissreinigungsapparatur 1 mit einem mundgerecht geformten Mundstück 2 ersichtlich, welches ausgestaltet ist, in einer Mundhöhle eine mehrere Zähne umschließende Reinigungskammer 3 auszuformen. Dabei weist die Reinigungskammer 3 eine Dichtlippe 4 auf, über welche die Reinigungskammer 3 in der Mundhöhle gegenüber dem die Zähne umgebenden Zahnfleisch abdichtbar ist. Weiterhin weist das Mundstück 2, in Fig. 4 und Fig. 7 dargestellt, in die Reinigungskammer 3 hinein gerichtete Düsen 8 auf, durch welche eine Druckspülung von Zähnen oder Interdentalzwischenräumen mit einem Fluid bewirkbar ist. Die Gebissreinigungsapparatur 1 weist ferner Mittel zum Befüllen der Reinigungskammer 3 mit zumindest einem Fluid sowie einen zentralen Schwingungsgeber 7 auf, mit welchem ein Fluid in der Reinigungskammer 3 in Ultraschallschwingung versetzbar ist. Die Dichtlippe 4 des Mundstücks 2 ist elastisch verformbar und die Gebissreinigungsapparatur 1 weist zur Abdichtung der Reinigungskammer 3 gegenüber dem Zahnfleisch Mittel, beispielsweise in Form einer Fluidpumpe 10, zur Anpassung der Dichtlippe 4 an die Kontur des Zahnfleisches auf.

Aus der Fig. 1 ersichtlich weist die Gebissreinigungsapparatur 1 weiterhin einen Handgriff 11 auf, welcher mit einem abnehmbaren Tank 12 lösbar verbunden ist. Der Tank 12 ist zur Aufnahme eines Fluids 9 geeignet, welches mittels einer Fluidpumpe 10 in die Reinigungskammer 3 zur Erzeugung eines Ultraschall-Bads 5 befördert werden kann. Ein Befüllen der Reinigungskammer 3 und eine Druckveränderung in der Dichtlippe 4 sind mittels derselben Fluidpumpe bewirkbar. Der zentrale Schwingungsgeber 7 ist mit einem Schwingungsblech 16 verbunden. Alternativ zu einem zentralen Schwingungsgeber 7 im Handgriff 11 kann die Gebissreinigungsapparatur 1 auch dezentral im Mundstück 2 verteilte Schwingungsgeber mit mehreren Schwingungsblechen 16 aufweisen. Die Gebissreinigungsapparatur 1 weist ferner eine Elektronik 14, einen Akku 15 sowie eine Vorrichtung zur Induktionsladung 13 auf.

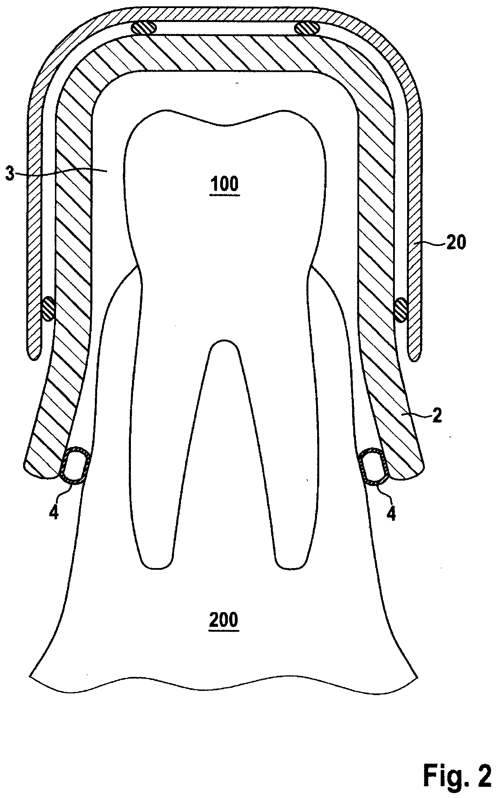

Fig. 2 zeigt eine Skizze eines Querschnitts durch ein Mundstück 2, welches eine einseitige Reinigungskammer 3 ausbildet und U-förmige Federklammern 20 aufweist, die quer zu einer Reihe von zu umschließenden Zähnen 100 angeordnet sind und einzelne oder mehrere Zähne 100 im Bogen überspannen. Zur besseren Verdeutlichung wurde auf die Darstellung weiterer Merkmale der Mundstücks 2 in dieser Darstellung verzichtet. Die Fig. 2 zeigt eine Anordnung, bei welcher die Federklammer 20 außerhalb der Wandung des Mundstücks 2 angeordnet und über einzelne Befestigungspunkte mit diesem verbunden ist. Alternativ kann die Federklammer 20 auch innerhalb der Wandung des Mundstücks 2 angeordnet sein. Die Federklammer 20 wird bei einem Aufsetzen des Mundstücks 2 auf die Reihe von Zähnen 100 gespreizt, so dass die Rückstellkräfte der Federklammer 20 einen Andruck der Wandung des Mundstücks 2 mit der elastischen Dichtlippe 4 an das Zahnfleisch 200 bewirken.

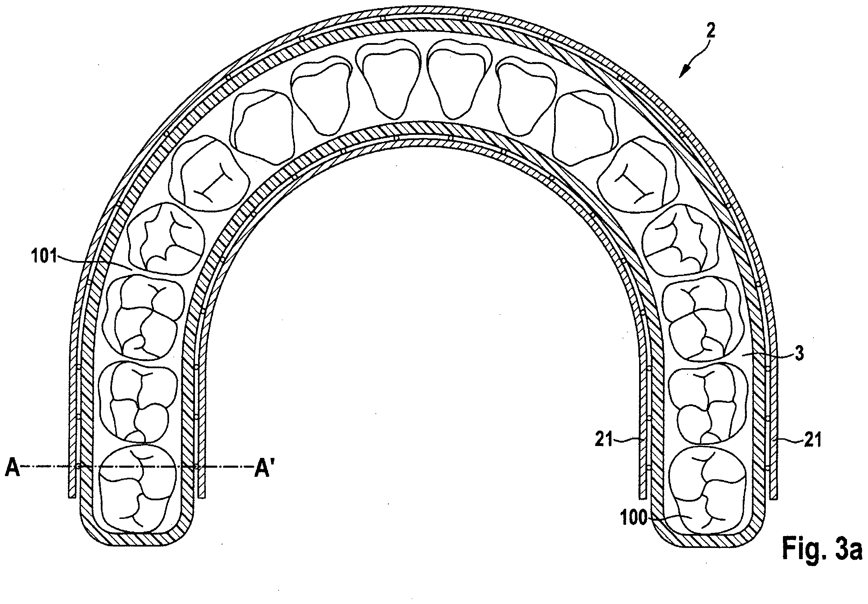

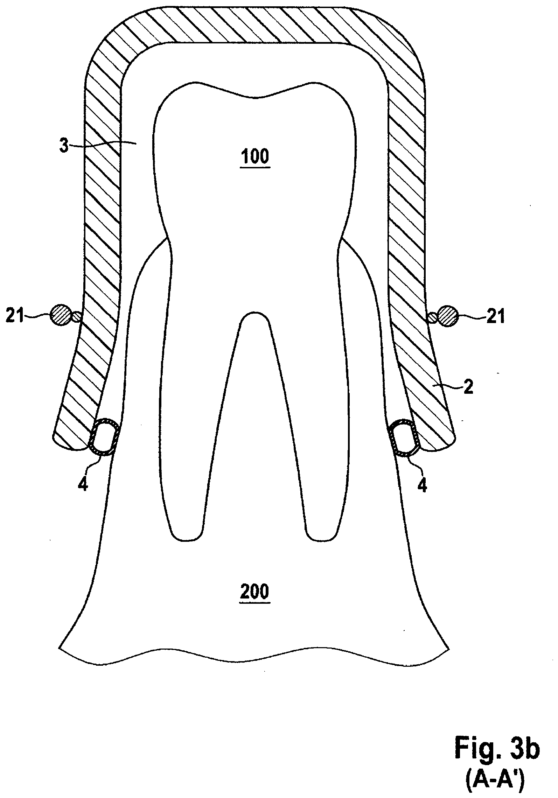

Fig. 3a zeigt eine Skizze durch ein Mundstück 2 in einem Längsschnitt, parallel zur Bissebene, bei einer Anordnung des Mundstücks 2 auf einem Unterkiefer mit Zähnen 100 sowie Interdentalzwischenräumen 101. Aus Fig. 3a ersichtlich sind bogenförmige Federklammern 21 im Mundstück 2 längs zu einer Reihe von zu umschließenden Zähnen 100 angeordnet. Die Federklammern 21 sind außerhalb der Wandung des Mundstücks 2 angeordnet und nur punktuell mit diesem verbunden. Alternativ können die Federklammern 21 auch innerhalb der Wandung des Mundstücks 2 angeordnet sein. Die innere der Federklammern 21 wird bei einem Aufsetzen des Mundstücks 2 auf die Reihe von Zähnen 100 gestaucht, die äußere wird gespreizt, so dass wie aus Fig. 3b ersichtlich die Rückstellkräfte der Federklammern 21 jeweils einen Andruck einer Wandung des Mundstücks 2 mit einer elastischen Dichtlippe 4 an das Zahnfleisch 200 bewirken. Zur besseren Verdeutlichung wurde auf die Darstellung weiterer Merkmale des Mundstücks 2 in den Darstellungen der Figuren 3a und 3b verzichtet.

In der aus Fig. 4 ersichtlichen Ausführungsform ist die elastische Dichtlippe 4 als geschlossener elastischer Schlauch ausgeführt und ein Anpassen der Dichtlippe 4 an die Kontur des Zahnfleisches 200 über eine Druckveränderung in der Dichtlippe 4 durch die Zufuhr eines Fluides über eine Leitung 19 erzielbar. Über die in Fig. 4 ebenfalls dargestellten Düsen 8 ist eine Druckspülung der Zähne 100 sowie von Interdentalzwischenräumen 101, siehe Fig. 3a, bewirkbar. Auf die Darstellung weiterer Details des Mundstücks 2 wurde der besseren Darstellung halber in dieser Ansicht verzichtet.

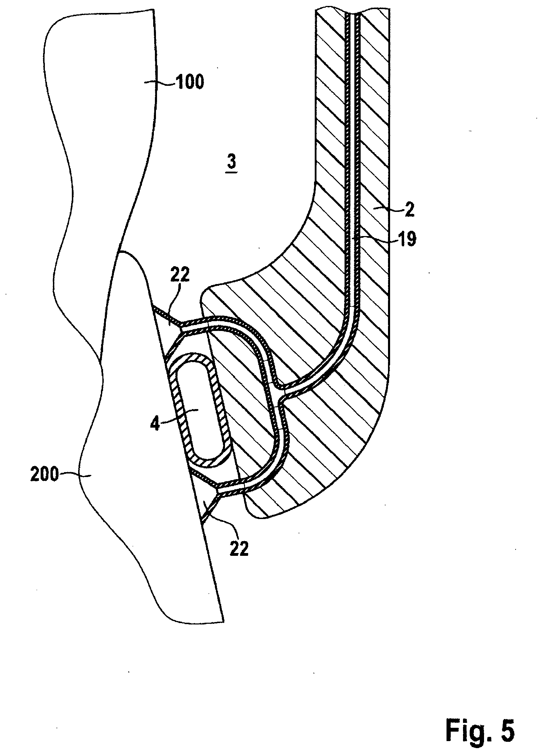

Fig. 5 zeigt eine Ausführungsform des Mundstücks 2, bei welchem an diesem eine Mehrzahl von Saugvorrichtungen 22 angeordnet ist, die manuell oder maschinell mittels eines in ihnen erzeugten Unterdrucks an das Zahnfleisch 200 oder umgebende Partien der Mundhöhle anhaftbar sind. Bei der in Figur 5 dargestellten Ausführungsform ist ein Unterdruck in den Saugvorrichtungen 22 über die Leitung 19 erzielbar. Bei der dargestellten Ausführungsform sind die Saugvorrichtungen auf beiden Seiten der Dichtlippe 4 angeordnet. Ein Teil der Saugvorrichtungen 22 ist innerhalb, ein anderer Teil der Saugvorrichtungen 22 ist außerhalb der Reinigungskammer 3 angeordnet.

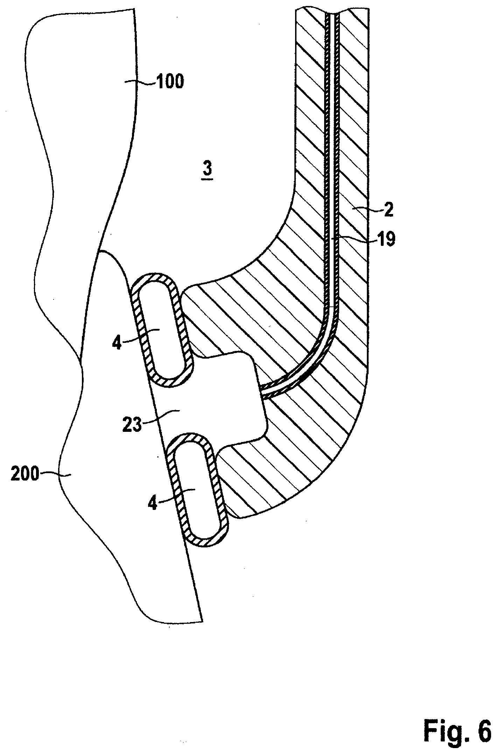

Fig. 6 zeigt eine weitere Ausführungsform des Mundstücks 2, bei welchem die die Wandung des Mundstücks 2 zwei parallel angeordnete Dichtlippen 4 zur Ausgestaltung eines spaltartigen Zwischenraumes 23 aufweist. Durch die Erzeugung eines Unterdrucks in dem spaltartigen Zwischenraum 23 kann ein Andruck der Dichtlippen 4 an das Zahnfleisch 200 bewirkt werden.

Fig. 7 zeigt einen Querschnitt durch ein Mundstück 2, durch welches eine doppelseitige Reinigungskammer 3 ausgebildet wird. Die Abdichtung der Reinigungskammer 3 gegenüber dem Zahnfleisch 200 erfolgt durch elastische Dichtlippen 4. Die Wandung des Mundstücks 2 weist Kanäle zur Zufuhr von Fluid zu den Düsen 8 auf, durch welche eine Druckspülung von Zähnen 100 und Interdentalzwischenräumen 101 bewirkbar ist. Des Weiteren sind die Wandungen des Mundstücks 2 mit Schwingungsblechen 16, gegebenenfalls in Verbindung mit dezentralen Schwingungsgebern verbunden.

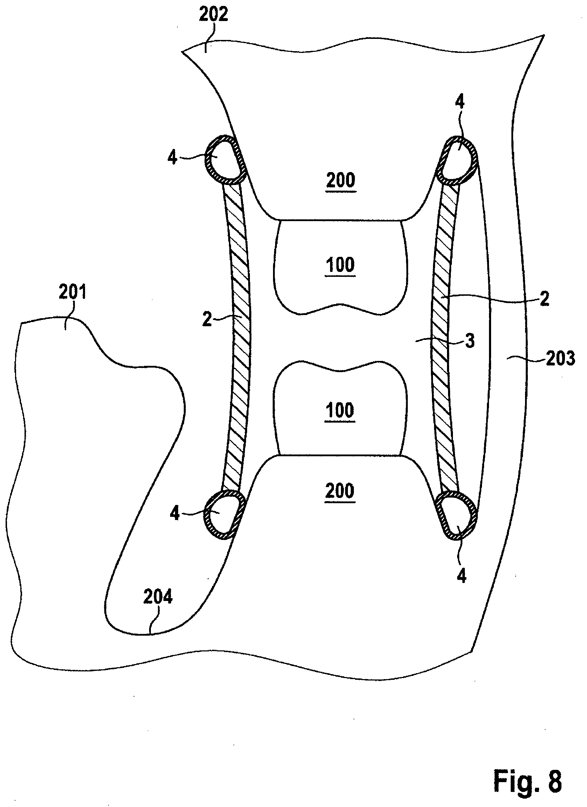

Fig. 8 zeigt eine Ausführungsform, bei welcher das Mundstück 2 eine doppelseitige Reinigungskammer 3 ausbildet. Das Mundstück 2 weist eine innere, zur Zunge 201 hin gerichtete, und eine äußere, zu Lippen und Wange 203 hin gerichtete Wandung auf, wobei die Wandungen wiederum jeweils eine obere und untere Dichtlippe 4 aufweisen. Dabei ist das Höhenprofil der äußeren Wandung vorteilhaft derart ausgebildet, dass die obere Dichtlippe 4 in der Mundhöhle in der oberen Umschlagfalte zwischen oberen Alveolaransatz und Wange 203 und die untere Dichtlippe 4 in der unteren Umschlagsfalte zwischen unteren Alveolaransatz und Wange 203 zu liegen kommt. Diese Ausführung bietet den Vorteil, dass die beiden Umschlagsfalten für das Mundstück 2 jeweils einen guten, rutschsicheren Halt bieten. Das Höhenprofil der inneren Wandung ist vorteilhaft derart ausgebildet, dass die untere Dichtlippe 4 auf dem Mundboden 204 zwischen unterem Alveolarfortsatz und Zunge 201 aufliegt, wohingegen die obere Dichtlippe 4 im Übergangsbereich zwischen oberen Alveolarfortsatz und Gaumen 203 anliegt. Auf die Darstellung weiterer Details wie beispielsweise Schwingungsblechen 16, Federklammern 20, 21, Düsen 8 oder Leitungen 19 wurde der besseren Darstellbarkeit halber in dieser Figur verzichtet.

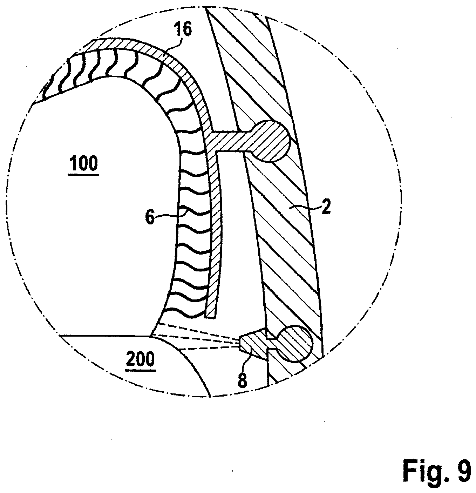

Aus Fig. 9 ist eine Ausführungsform ersichtlich, bei welcher das Mundstück 2 zur Verstärkung der Reinigungswirkung ein Flimmerhaarvlies 6 aufweist. Dieses ist auf einem Schwingungsblech 16 angeordnet. In einem Schnitt quer zur Reihe der Zähne 100 weist das Schwingungsblech 16 von diesen beabstandet in etwa das Profil der Zähne 100 auf, so dass der Abstand des Schwingungsblechs 16 von den Zähnen 100 in etwa gleichmäßig verläuft. Somit ist ein gleichmäßiges Einwirken des Flimmerhaarvlieses 6 auf die Oberfläche der Zähne 100 bewirkbar.

## Patentansprüche

1. Gebissreinigungsapparatur (1) mit einem mundgerecht geformten Mundstück (2), welches ausgestaltet ist, in einer Mundhöhle eine mehrere Zähne (100) umschließende Reinigungskammer (3) auszuformen,
wobei der Teil des Mundstücks (2), welcher ausgestaltet ist, die Reinigungskammer (3) auszuformen, eine Dichtlippe (4) aufweist, über welche die Reinigungskammer (3) in der Mundhöhle gegenüber dem die Zähne (100) umgebenden Zahnfleisch (200) abdichtbar ist,
wobei das Mundstück (2) in die Reinigungskammer (3) hineingerichtete Düsen (8) aufweist, durch welche eine Druckspülung von Zähnen (100) oder Interdentalzwischenräumen (101) mit einem Fluid bewirkbar ist,
wobei die Gebissreinigungsapparatur (1) Mittel zum Befüllen der Reinigungskammer (3) mit zumindest einem Fluid aufweist,
und die Gebissreinigungsapparatur (1) einen Schwingungsgeber aufweist, mit welchem ein Fluid in der Reinigungskammer (3) in Schall- oder Ultraschallschwingung versetzbar ist, **dadurch gekennzeichnet,**
**dass** die Dichtlippe (4) elastisch verformbar ist und die Gebissreinigungsapparatur (1) zur Abdichtung des Teil des Mundstücks (2), welcher ausgestaltet ist, die Reinigungskammer (3) auszuformen, gegenüber dem Zahnfleisch (200) Mittel zur Anpassung der Dichtlippe (4) an die Kontur des Zahnfleisches (200) aufweist.

2. Gebissreinigungsapparatur (1) nach Anspruch 1, **dadurch gekennzeichnet, dass** das Mundstück (2) zum Andruck der Dichtlippe (4) an das Zahnfleisch (200) Federklammern (20), (21) aufweist.

3. Gebissreinigungsapparatur (1) nach einem der vorherigen Ansprüche, **dadurch gekennzeichnet, dass** die Gebissreinigungsapparatur (1) eine Fluidpumpe aufweist, die elastische Dichtlippe (4) als geschlossener elastischer Schlauch ausgeführt ist und ein Anpassen der Dichtlippe (4) an die Kontur des Zahnfleisches (200) über eine Druckveränderung in der Dichtlippe (4) durch die Zufuhr eines Fluids erzielbar ist.

4. Gebissreinigungsapparatur (1) nach Anspruch 3, **dadurch gekennzeichnet, dass** die Dichtlippe (4) aufblasbar ist.

5. Gebissreinigungsapparatur (1) nach einem der vorherigen Ansprüche, **dadurch gekennzeichnet, dass** ein Befüllen der Reinigungskammer (3) und eine Druckspülung, oder ein Befüllen der Reinigungskammer (3) und eine Druckveränderung in der Dichtlippe (4), oder eine Druckspülung und eine Druckveränderung in der Dichtlippe (4) mittels derselben Fluidpumpe bewirkbar ist.

6. Gebissreinigungsapparatur (1) nach einem der vorherigen Ansprüche, **dadurch gekennzeichnet, dass** das Mundstück (2) zumindest eine Saugvorrichtung (22) aufweist, die manuell oder maschinell mittels eines in ihr erzeugten Unterdrucks an das Zahnfleisch (200) oder umgebende Partien der Mundhöhle anhaftbar ist.

7. Gebissreinigungsapparatur (1) nach einem der vorherigen Ansprüche, **dadurch gekennzeichnet, dass** das Mundstück (2) Düsen (8) aufweist, die zur Pulverbestrahlung geeignet sind.

8. Gebissreinigungsapparatur (1) nach einem der vorherigen Ansprüche, **dadurch gekennzeichnet, dass** die Gebissreinigungsapparatur (1) einen Handgriff (11) und einen Verbindungsmechanismus zwischen Handgriff (11) und Mundstück (2) aufweist, wobei der Verbindungsmechanismus derart ausgeführt ist, dass er mit einem Satz verschiedener Mundstücke (2) verbindbar ist, und er einen Erkennungsmechanismus zur Unterscheidung verschiedener Mundstücke (2) aufweist.

9. Gebissreinigungsapparatur (1) nach einem der vorherigen Ansprüche, **dadurch gekennzeichnet, dass** das Mundstück (2) innerhalb der Reinigungskammer (3) ein Flimmerhaarvlies (6) aus Carbonfasern aufweist.

10. Gebissreinigungsapparatur (1) nach einem der vorherigen Ansprüche, **dadurch gekennzeichnet, dass** die Gebissreinigungsapparatur (1) ausgeführt ist, ein für eine Druckspülung verwendetes Fluid in der Reinigungskammer (3) aufzufangen und mit dem aufgefangenen Fluid eine Ultraschallreinigung von durch die Reinigungskammer (3) umschliessbaren Zähnen (100) zu bewirken.

11. Gebissreinigungsapparatur (1) nach einem der vorherigen Ansprüche, **dadurch gekennzeichnet, dass** die Gebissreinigungsapparatur (1) Mittel aufweist, mittels derer die Reinigungskammer (3) geöffnet und geschlossen werden kann.

12. Gebissreinigungsapparatur (1) nach einem der vorherigen Ansprüche, **dadurch gekennzeichnet, dass** die Reinigungskammer (3) derart ausgeführt ist, dass durch eine Druckminderung in der Dichtlippe (4) ein Öffnen der Reinigungskammer (3) erzielbar ist.

13. Gebissreinigungsapparatur (1) nach Anspruch 11 oder Anspruch 12, **dadurch gekennzeichnet, dass** die Gebissreinigungsapparatur (1) eine Steuerung aufweist, welche eingerichtet ist, die Schritte auszuführen
i) Druckspülen von Zähnen (100) oder Interdentalzwischenräumen mit einem Fluid, wobei das Fluid in der Reinigungskammer (3) aufgefangen wird;
ii) Ultraschallreinigung von durch die Reinigungskammer (3) umschlossenen Zähnen (100) mittels des in der Reinigungskammer (3) aufgefangenen Fluids;
iii) Öffnen der Reinigungskammer (3) und Ablassen des darin befindlichen Fluids;

14. Gebissreinigungsapparatur (1) nach Anspruch 13, **dadurch gekennzeichnet, dass** die Steuerung den weiteren Schritt aufweist,
iv) Druckspülen von Interdentalzwischenräumen mit einem Fluid, wobei die Reinigungskammer (3) geöffnet ist.

15. Gebissreinigungsapparatur (1) nach einem der vorherigen Ansprüche, **dadurch gekennzeichnet, dass** die Gebissreinigungsapparatur (1) einen Betriebsmodus aufweist, in welchem zwischen einem Betrieb im Ultraschallbereich und einem Betrieb im Schallbereich, oder einem Betrieb im Schallbereich und einem Betrieb im Ultraschallbereich gewechselt wird.
